# FASCICULE DE BREVET EUROPEEN

(11) **EP 3 642 547 B1**
(45) Date de publication et mention de la délivrance du brevet: **09.08.2023**
(21) Numéro de dépôt: 18749439.8
(22) Date de dépôt: 21.06.2018
(51) Int. Cl.: F28D 20/00

(54) **RÉSERVOIR DE STOCKAGE DE CHALEUR OPTIMISÉ À PARTIR DE PARTICULES DE CARBONATE DE CALCIUM**
UNTER VERWENDUNG VON CALCIUMCARBONATTEILCHEN OPTIMIERTER WÄRMESPEICHERTANK
HEAT STORAGE TANK OPTIMISED USING CALCIUM CARBONATE PARTICLES

(30) Priorité: 21.06.2017 FR 1755667
(43) Date de publication de la demande: 29.04.2020
(73) Titulaire: Arkema France, 92700 Colombes (FR)
(72) Inventeur: BLANC, Jérôme, 69530 Brignais (FR); LARNICOL, Pierre, 91370 Verriere Le Buisson (FR)
(74) Mandataire: Arkema Patent
(86) Numéro de dépôt international: PCT/FR2018/051508
(87) Numéro de publication internationale: WO 2018/234707

(56) Documents cités:
- EP-A1- 2 576 720
- EP-A2- 2 341 308
- DE-U1-202013 004 654
- FR-A1- 2 965 341
- US-A1- 2009 090 109
- US-A1- 2015 136 115

## Description

La présente invention concerne un réservoir de stockage thermique comportant au moins un matériau de stockage thermique solide chimiquement inerte contenant au moins des particules de carbonate de calcium.

L'invention se rapporte également à l'utilisation d'au moins un matériau de stockage thermique solide chimiquement inerte comportant au moins des particules de carbonate de calcium pour limiter la vitesse de dégradation d'un fluide caloporteur apte à circuler dans un réservoir de stockage thermique.

L'invention est aussi relative à une installation de récupération de chaleur fatale d'origine industrielle comportant au moins un réservoir de stockage contenant au moins un liquide caloporteur et au moins un matériau de stockage thermique solide chimiquement inerte comportant au moins des particules de carbonate de calcium.

L'invention est aussi relative à une centrale solaire comportant au moins un réservoir de stockage thermique contenant au moins un liquide caloporteur et au moins un matériau de stockage thermique solide chimiquement inerte comportant au moins des particules de carbonate de calcium.

La transition énergétique est un des grands enjeux de notre siècle car elle désigne le passage du système énergétique actuel utilisant des ressources non renouvelables, telles que le pétrole, le gaz naturel, le charbon, et les matières radioactives comme l'uranium et le plutonium, à un système fondé principalement sur des ressources renouvelables, telles que la biomasse, et des sources d'énergie renouvelables telles que l'énergie hydraulique, éolienne, solaire ou géothermique.

Parmi ces énergies renouvelables, certaines ont une production qui s'avère irrégulière et intermittente. Le stockage d'énergie est donc dans ce cas une technologie permettant d'accroître leur utilisation et constitue un élément central de la transition énergétique de par sa flexibilité et son efficacité. Il permet non seulement de mieux valoriser l'énergie mais également de mieux dimensionner nos équipements futurs, de production comme de consommation.

Les technologies de stockage d'énergie, dites classiques, (pompage, batteries, hydrogène, air comprimé) ont généralement en commun le coût souvent très élevé de l'investissement de départ de l'installation de stockage. De plus, l'impact géographique des projets mettant en jeu un système de pompage turbinage (encore appelés STEP : Stations de transfert d'énergie par pompage), liés à l'énergie hydraulique, ou de stockage d'air comprimé en cavité (encore appelés CAES : Compressed Air Energy Storage en langue anglaise) est important, en raison de la taille des installations mises en oeuvre, et le nombre de sites possibles d'implantation peut s'avérer limité.

La chaleur est une forme d'énergie susceptible d'être stockée très facilement à faible coût, notamment à basse température, et son stockage permet principalement le chauffage des bâtiments ce qui représente une part importante de la consommation énergétique en Europe. Par ailleurs, le stockage de chaleur peut aussi améliorer le fonctionnement et la durée de vie des centrales solaires, en particulier les centrales solaires thermodynamiques à concentration (appelées CSP : Concentrated Solar Power en langue anglaise).

Les sources de chaleur proviennent en premier lieu de l'énergie solaire qui présente, de par sa nature, un caractère intermittent (par exemple, différence entre la journée et le soir ou entre l'été et l'hiver), dilué et aléatoire (notamment à cause des passages nuageux imprévisibles) ce qui rend sa production décalée par rapport à la demande énergétique quotidienne ou saisonnière. Le stockage de la chaleur a ainsi pour but de pallier au caractère intermittent et aléatoire de l'énergie solaire en réduisant le décalage et le découplage entre les périodes les plus productives et les périodes de plus grandes demandes. En particulier, la chaleur, produite de manière excédentaire lors de périodes de fort ensoleillement, peut être avantageusement stockée pour être par la suite exploitée en fin de journée.

En outre, la chaleur peut être issue de processus industriels mis en oeuvre dans de nombreux domaines. Dans ce cas, il est possible de stocker la chaleur produite par certaines industries en complément de leur activité principale.

Le stockage de la chaleur est généralement réalisé à partir d'un matériau solide, liquide ou une combinaison des deux, appelé matériau de stockage, ayant la capacité de libérer ou stocker de la chaleur par le biais d'un transfert thermique. Un tel transfert peut être effectué par chaleur sensible, c'est-à-dire par changement de la température du matériau (en d'autres termes, la chaleur est emmagasinée dans le matériau), ou par chaleur latente, c'est-à-dire par changement de phase isotherme à pression constante du matériau (notamment un changement solide/liquide d'un matériau pour lequel la variation volumique est faible).

Le stockage de la chaleur peut en outre se faire par voie thermochimique en faisant intervenir des réactions chimiques réversibles conduites généralement à une température variant de 300 à 1000°C. Ces réactions consomment ou libèrent de la chaleur par dissociation ou combinaison de réactifs. A titre d'exemple, on peut citer la réaction réversible de déshydratation de l'hydroxyde de calcium et d'hydratation de l'oxyde de calcium.

Il en résulte qu'il existe, à l'heure actuelle, principalement trois procédés de stockage de la chaleur.

Les procédés, visant à transformer l'énergie solaire en chaleur puis à convertir l'énergie thermique obtenue en énergie électrique et mécanique, sont généralement mis en oeuvre à partir d'un système de captation solaire, un système de stockage d'énergie thermique et un système de conversion thermodynamique. Ces procédés classiques sont typiquement utilisés dans les centrales solaires thermodynamiques à concentration.

Le système de captation solaire a pour but de capter les radiations solaires et de les concentrer sur un récepteur dans lequel s'écoule un fluide caloporteur. Durant cette étape, le rayonnement solaire est converti en énergie thermique. Un tel système permet de concentrer les rayons solaires. En particulier, le système de captation solaire peut mettre en oeuvre des réflecteurs cylindro-paraboliques, des réflecteurs linéaires de Fresnel, des héliostats (rayons solaires concentrés en haut d'une tour fixe) ou des miroirs paraboliques.

Le système de stockage permet de stocker et restituer l'énergie thermique excédentaire afin notamment de décorréler la production de l'énergie électrique et/ou mécanique de la ressource solaire palliant ainsi les inconvénients liés au caractère intermittent et aléatoire de l'énergie solaire.

Le procédé de stockage de chaleur de l'énergie thermique se déroule le plus souvent en trois étapes. Une étape de charge, durant laquelle l'énergie thermique, issue du système de captation solaire, est emmagasinée, une étape de stockage de la chaleur, ayant une durée plus ou moins longue selon le procédé mis en oeuvre, et une étape de décharge (ou déstockage) correspondant à la phase de restitution de l'énergie thermique vers le système de conversion thermodynamique.

Le système de conversion thermodynamique a pour but de convertir l'énergie thermique en énergie mécanique et électrique grâce notamment à la mise en oeuvre d'un cycle thermodynamique, par exemple une turbine à vapeur, transformant l'énergie thermique du fluide caloporteur en énergie mécanique. Lorsque le cycle thermodynamique est couplé à un générateur électrique alors l'énergie mécanique est également transformée en énergie électrique.

Le fluide caloporteur circulant dans le système de captation solaire peut être identique ou différent du fluide alimentant le cycle thermodynamique. Dans le cas où le fluide caloporteur est différent du fluide alimentant le cycle thermodynamique, ce dernier correspond alors à un fluide de travail. L'échange thermique entre le fluide caloporteur et le fluide de travail est réalisé à l'aide d'un échangeur de chaleur. Le fluide de travail emmagasine donc l'énergie thermique.

Au cours de ces procédés, le système de stockage de chaleur permet notamment de contribuer à la production en continu de l'énergie électrique, de gérer les pics de production et d'adapter la production à la demande. Le système de stockage de chaleur a donc pour rôle d'améliorer le rendement de ce type de procédés ainsi que la durée de vie des installations solaires les mettant en oeuvre. En d'autres termes, le système de stockage améliore la rentabilité et la durée de vie des centrales solaires thermodynamiques à concentration. Il permet aussi de réduire le coût du kWh électrique. En outre, le stockage d'énergie thermique présente l'avantage d'être moins onéreux que le stockage d'énergie électrique.

Dans le cas d'un système de stockage par chaleur sensible, l'énergie thermique est stockée par élévation de la température d'un matériau de stockage susceptible d'être sous forme liquide, solide ou une combinaison des deux. En d'autres termes, le système de stockage par chaleur sensible consiste à utiliser les propriétés calorifiques du matériau de stockage avec un simple changement de température de celui-ci. Les échanges thermiques ayant lieu entre le fluide caloporteur, éventuellement le fluide de travail, et le matériau de stockage peuvent être réalisés à l'aide d'un échangeur de chaleur. Le matériau de stockage peut aussi correspondre au fluide caloporteur.

Différentes technologies ont été développées à l'échelle industrielle afin de mettre en oeuvre les systèmes de stockage par chaleur sensible.

A titre d'exemple, un système de stockage peut être constitué de deux réservoirs distincts remplis d'un fluide de stockage ayant deux températures différentes, à savoir un réservoir dit « chaud », c'est-à-dire ayant une température haute constante, situé en sortie du système de captation solaire, et un réservoir dit « froid », c'est-à-dire ayant une température froide constante, situé en sortie du cycle thermodynamique. En particulier, le réservoir chaud permet de stocker le fluide en sortie du système de captation solaire afin d'alimenter le cycle thermodynamique lors de la période de non-ensoleillement. En sortie de celui-ci, le fluide refroidi est envoyé vers le réservoir froid avant d'être redirigé vers le système de captation solaire. Ainsi, pendant la phase de stockage, le fluide froid est pompé du réservoir froid vers le système de captation solaire ou l'échangeur pour être chauffé et ensuite stocké dans la réserve de fluide chaud. Tandis que, pendant la phase de déstockage, le fluide chaud est dirigé vers le système de conversion thermodynamique afin de restituer l'énergie thermique emmagasinée.

De manière alternative, il existe également des systèmes de stockage ayant un réservoir unique rempli d'un seul fluide ayant deux températures distinctes, à savoir une température chaude (correspondant au fluide chaud) et une température froide (correspondant au fluide froid). Ainsi le fluide chaud et le fluide froid sont présents dans le même réservoir avec un gradient thermique entre les deux, appelé thermocline. En d'autres termes, dans le réservoir, le fluide chaud (ou la zone chaude du fluide) occupe la partie supérieure, le fluide froid (ou la zone froide du fluide) occupe la partie inférieure ; ces deux parties étant espacées l'une de l'autre par une région de transition, appelée thermocline, correspondant au gradient thermique. Un tel système de stockage de chaleur à réservoir unique correspond à un stockage de type thermocline. Dans ce type de système, le fluide correspond au fluide caloporteur et éventuellement au fluide de travail. En d'autres termes, de préférence, le même fluide caloporteur circule entre le système de captation solaire, le système de stockage de type thermocline et le système de conversion thermodynamique.

L'utilisation d'un réservoir unique présente l'avantage de réduire le nombre de composants ainsi que le dimensionnement des systèmes de stockage de chaleur. Le système thermocline à réservoir unique présente aussi un fonctionnement simplifié par rapport à un système à deux réservoirs. Ce type de système est donc financièrement compétitif.

De manière préférée, le matériau de stockage utilisé dans un système de stockage de type thermocline correspond à un mélange d'un fluide caloporteur et d'un matériau de stockage solide ayant un prix de revient faible. En particulier, l'utilisation d'un matériau de stockage solide bon marché, disponible en grande quantité et susceptible de provenir d'origine diverse, permet de remplacer une grande partie du fluide caloporteur pouvant être plus onéreux. Ainsi le coût du système de stockage de type thermocline dans son ensemble est abaissé. Autrement dit, l'emploi d'un matériau de stockage solide bon marché accentue, d'un point de vue économique, le caractère compétitif d'un système thermocline à réservoir unique.

En outre, le matériau solide agit comme un distributeur d'écoulement poreux et évite les phénomènes d'écoulement, survenant dans les systèmes de stockage de type thermocline à réservoir unique comportant seulement le fluide caloporteur, et pouvant aboutir au mélange des zones chaudes et froides du fluide. Autrement dit, la présence du matériau solide de stockage dans le réservoir unique conduit à une amélioration de la ségrégation entre les zones chaudes et froides du fluide caloporteur.

Au cours des phases de charge et décharge dans ce type de système, la zone dite « thermocline » se déplace axialement au sein du réservoir, c'est-à-dire vers le bas et vers le haut respectivement.

Pendant la phase de charge dans ce type de système, le fluide chaud, en provenance du système de captation solaire, est introduit dans la partie supérieure du réservoir, s'écoule vers le bas à travers le matériau de stockage solide. Au fur et à mesure de sa circulation à travers le matériau de stockage solide, le fluide est refroidi et le matériau de stockage solide passe d'une température froide (i.e. une température faible, TF) à une température chaude (i.e. une température plus élevée, TC). Le fluide froid est évacué, à travers la partie inférieure du réservoir, vers le système de captation solaire pour emmagasiner l'énergie thermique. La zone dite « thermocline » se déplace donc axialement vers le bas. Ainsi le front thermique se déplace vers le bas du réservoir.

Pendant l'étape de stockage, la zone chaude du fluide caloporteur se situe dans la partie supérieure du réservoir, la zone froide du fluide occupe la partie inférieure ; ces deux zones étant séparées par la région ou zone dite « thermocline ».

Pendant la phase de décharge (ou de déstockage) dans ce type de système, le sens de circulation du fluide caloporteur est inversé. Le fluide froid, issu du système de conversion thermodynamique, est introduit dans le réservoir par la partie inférieure et circule vers le haut à travers le matériau de stockage solide. Au fur et à mesure de sa circulation à travers le matériau de stockage solide, le fluide est chauffé et le matériau de stockage solide passe d'une température chaude (i.e. une température élevée, TC) à une température froide (i.e. une température moins élevée, TF). Le fluide chaud est ensuite évacué du réservoir, à travers sa partie supérieure, vers le système de conversion thermodynamique pour restituer l'énergie thermique. La zone dite « thermocline » se déplace donc axialement vers le haut. Le front thermique se déplace donc vers le haut du réservoir.

Dans les phases de charge et décharge, le matériau solide de stockage absorbe ou transfère la chaleur du fluide caloporteur. Ce matériau est donc susceptible de stocker et de restituer l'énergie thermique du fluide. Autrement dit, le fluide caloporteur permet de charger et décharger l'énergie thermique dans le matériau de stockage solide.

Lors de la phase de déstockage du système, lorsque le fluide caloporteur chaud, évacué à travers la partie supérieure du réservoir, restitue au système de conversion thermodynamique une température identique à celle initiale du matériau solide de stockage, c'est-à-dire la température du matériau solide de stockage lors de la phase de charge (température TC), alors ce système se comporte comme un système de stockage thermique idéal. Ainsi la température du fluide caloporteur va être fonction des conditions d'échange thermique avec le matériau solide de stockage.

De plus, la conversion de l'énergie thermique en énergie électrique fait intervenir une première température à l'entrée du système de conversion thermodynamique, soit donc une température chaude (température TC), et une deuxième température en sortie du système, soit donc une température froide (température TF). Il en résulte que les bornes du cycle thermodynamique font intervenir deux niveaux de température. Le maintien de ces deux types de température à des températures constantes est activement recherché afin d'obtenir un fonctionnement optimisé du cycle thermodynamique. En d'autres termes, il est important que le système de type thermocline conduise à un déstockage de la chaleur à une température constante pendant une durée conséquente.

Inversement, il est également important de maintenir une température constante lors de la phase de charge du système de stockage.

En fonction des centrales solaires à concentration, les niveaux de température mentionnés ci-avant (TF et TC), dispensés par les systèmes de stockage thermique, sont différents et peuvent varier dans une gamme allant de 100°C à 650°C.

Afin de répondre aux exigences mentionnées ci-avant, ce type de système, à base d'un fluide caloporteur et d'un matériau solide de stockage, met en jeu des vitesses de circulation de fluide assez faibles. Ceci améliore le transfert de chaleur entre le fluide et le matériau solide et minimise les pertes d'énergie lors des échanges thermiques.

Par ailleurs, il est aussi important de contrôler la distribution du fluide caloporteur au sein du réservoir, c'est-à-dire d'améliorer la ségrégation entre la zone chaude et la zone froide du fluide, de manière à minimiser les phénomènes d'inhomogénéité de température, en sortie ou en entrée du réservoir, pouvant impacter l'efficacité du système de conversion thermodynamique et dégrader, par la même occasion, la qualité du fluide caloporteur.

En d'autres termes, l'un des enjeux de ces systèmes de stockage est de maîtriser et d'optimiser les conditions d'échange de chaleur entre le fluide caloporteur et le matériau solide de stockage afin non seulement d'améliorer le rendement de conversion en énergie électrique mais également de prolonger la durée de vie des systèmes de stockage de type thermocline. En effet, la dégradation de la qualité du fluide caloporteur au sein du réservoir unique peut entraîner à terme une réduction de la durée de vie du système de stockage ce qui impacte le fonctionnement du système de conversion thermodynamique.

Par ailleurs, les températures de fonctionnement peuvent aussi dégrader la qualité du fluide caloporteur.

Il a déjà été proposé des systèmes de stockage de type thermocline ayant un fonctionnement optimisé.

A titre d'exemple, le document US 2009/090109 décrit un réservoir de stockage thermique contenant un matériau de stockage sous forme de granulats comprenant au moins deux classes de granulats de talles différentes, et un fluide de travail.

Le document WO 2013/167538 décrit un système de stockage de chaleur à réservoir unique comportant un matériau solide de stockage et un fluide caloporteur qui sont répartis sur plusieurs étages en communication fluidique. Dans ce système, les couches de matériau solide, réparties sur au moins deux étages consécutifs, sont séparées par une couche de fluide caloporteur. Conformément au système proposé, le matériau solide de stockage est constitué par des roches, notamment de roches alluvionnaires, et/ou du sable et, plus particulièrement, ce matériau est agencé sous la forme d'un lit de blocs de roches et du sable remplissant les espaces entre les roches.

Ce type de système a pour but d'assurer une homogénéisation de la température à la fois dans les couches de fluide caloporteur et les couches de matériau solide afin de conduire à une température constante pendant les phases de charge et de décharge.

Cependant, il existe encore un réel besoin d'améliorer la qualité du fluide caloporteur au sein d'un système de stockage de chaleur à réservoir unique, i.e. de type thermocline, afin de maîtriser et d'optimiser son fonctionnement de manière à prolonger sa durée de vie et, par conséquent, le rendement de conversion en énergie électrique du système de conversion thermodynamique.

En particulier, il existe un besoin de limiter la dégradation du fluide caloporteur, notamment lorsque celui-ci est soumis à de fortes températures, afin de diminuer les coûts opérationnels liés à l'exploitation de ce type de système de stockage.

Ainsi l'un des objectifs de la présente invention est de proposer un système de stockage de chaleur à réservoir unique, i.e. de type thermocline, ayant des performances améliorées, notamment lors des processus de stockage et déstockage de la chaleur.

La présente invention a donc notamment pour objet un réservoir de stockage thermique selon la revendication 1.

En particulier, la présente invention a pour objet un réservoir de stockage thermique comportant au moins un matériau de stockage thermique solide chimiquement inerte contenant au moins des particules de carbonate de calcium, lesdites particules de carbonate de calcium présentant une distribution de taille ayant un diamètre d₅₀ de 0,5 mm à 200 mm, de préférence 1 mm à 100 mm, encore préférentiellement de 2 mm à 50 mm, et encore préférentiellement de 2 mm à 40 mm.

De préférence, ledit réservoir de stockage thermique ne contient pas de particule de verre.

Le matériau de stockage présent dans le réservoir de stockage thermique permet de limiter la dégradation du fluide caloporteur, en particulier sa vitesse de dégradation lorsque celui-ci est soumis à de fortes températures.

Ainsi la présence d'un matériau de stockage à base de particules de carbonate de calcium dans le réservoir de stockage selon l'invention permet de maintenir la qualité du fluide caloporteur dans le temps et diminuer *in fine* les coûts opérationnels liés à l'exploitation de ce type de stockage.

En particulier, l'utilisation d'un matériau de stockage à base de particules de carbonate de calcium dans le réservoir de stockage selon l'invention permet notamment d'améliorer la qualité du fluide caloporteur par rapport à un matériau solide constitué par des roches et/ou du sable dans les mêmes conditions opératoires, par exemple pendant une durée de 500 heures à une température de 340°C.

Cela signifie que le fluide caloporteur peut être partiellement remplacé par un matériau de stockage à base de particules de carbonate de calcium sans impacter négativement sur sa qualité.

Le réservoir de stockage thermique selon l'invention dispose donc de performances améliorées, notamment lors des processus de stockage et déstockage de la chaleur, ce qui induit une optimisation de la conversion de l'énergie thermique en énergie électrique lors de la conversion thermodynamique au moyen d'une turbine.

Plus particulièrement, le matériau de stockage à base de particules de carbonate de calcium dans le réservoir de stockage selon l'invention prolonge la durée de vie des systèmes de stockage thermique à réservoir unique.

Par ailleurs, le réservoir de stockage thermique selon l'invention conserve son aspect attractif d'un point de vue économique.

En effet, le réservoir de stockage selon l'invention induit, d'une part, des coûts opérationnels plus faibles que ceux d'un réservoir rempli uniquement d'un fluide caloporteur et, d'autre part, présente une durée de vie plus importante qu'un réservoir de stockage contenant un fluide caloporteur et un matériau de stockage solide constitué par des roches et/ou du sable.

L'invention a également pour objet l'utilisation d'au moins un matériau de stockage thermique solide, chimiquement inerte, contenant au moins des particules de carbonate de calcium pour limiter la vitesse de dégradation d'un fluide caloporteur apte à circuler dans un réservoir de stockage thermique.

En particulier, la présente invention a pour objet l'utilisation d'au moins un matériau de stockage thermique solide, chimiquement inerte, contenant au moins des particules de carbonate de calcium, lesdites particules de carbonate de calcium présentant une distribution de taille ayant un diamètre d₅₀ de 0,5 mm à 200 mm, de préférence 1 mm à 100 mm, encore préférentiellement de 2 mm à 50 mm, et encore préférentiellement de 2 mm à 40 mm, pour limiter la vitesse de dégradation d'un fluide caloporteur apte à circuler dans un réservoir de stockage thermique.

En particulier, le matériau de stockage thermique solide à base de particules de carbonate de calcium permet d'améliorer la stabilité thermique du fluide caloporteur.

De préférence, le matériau de stockage thermique solide ainsi utilisé permet de limiter la vitesse de dégradation d'un fluide caloporteur dans un réservoir de stockage thermique dans une gamme de températures allant de 100 à 500°C.

Ainsi le matériau de stockage thermique solide à base de particules de carbonate de calcium permet d'améliorer la stabilité thermique du fluide caloporteur à des températures pouvant varier de 100 à 500°C.

De cette façon, le matériau de stockage permet de prolonger le fonctionnement du système de stockage à des températures variant de 100 à 500°C et d'optimiser le fonctionnement du système de conversion thermodynamique à une telle température.

Un autre objet de la présente invention est une installation de récupération de chaleur fatale d'origine industrielle comportant au moins un réservoir de stockage thermique contenant au moins un fluide caloporteur et au moins un matériau de stockage thermique solide, chimiquement inerte, contenant au moins des particules de carbonate de calcium, de préférence présentant une distribution de taille ayant un diamètre d₅₀ de 0,5 mm à 200 mm, de préférence 1 mm à 100 mm, encore préférentiellement de 2 mm à 50 mm, et encore préférentiellement de 2 mm à 40 mm.

Par ailleurs, un autre objet de la présente invention est une centrale solaire comportant au moins un réservoir de stockage thermique contenant au moins un fluide caloporteur et au moins un matériau de stockage thermique solide, chimiquement inerte, contenant au moins des particules de carbonate de calcium, de préférence présentant une distribution de taille ayant un diamètre d₅₀ de 0,5 mm à 200 mm, de préférence 1 mm à 100 mm, encore préférentiellement de 2 mm à 50 mm, et encore préférentiellement de 2 mm à 40 mm.

D'autres caractéristiques et avantages de l'invention apparaîtront plus clairement à la lecture de la description et des exemples qui suivent.

Dans ce qui va suivre, et à moins d'une autre indication, les bornes d'un domaine de valeurs sont comprises dans ce domaine.

L'expression « au moins un » est équivalente à l'expression « un ou plusieurs ».

### Réservoir de stockage thermique

Comme indiqué ci-avant, le réservoir de stockage thermique comporte au moins un matériau de stockage thermique solide, chimiquement inerte, à base de particules de carbonate de calcium.

Au sens de la présente invention, on entend par « contenant au moins un matériau de stockage thermique » ou « comporte au moins un matériau de stockage thermique solide », le fait que le au moins un matériau de stockage thermique soit contenu à l'intérieur du réservoir de stockage thermique. En d'autres termes, le matériau de stockage thermique sert de matériau de remplissage du réservoir de stockage thermique.

Au sens de la présente invention, par « matériau de stockage thermique », on entend un matériau susceptible de stocker de l'énergie thermique en faisant varier sa température. La quantité d'énergie stockée peut dépendre généralement de la chaleur spécifique du matériau, l'écart de température que le matériau subit et de la quantité du matériau présent dans le réservoir.

A titre d'exemple, si la température du matériau s'élève d'une température T1 à T2 pour un matériau de masse m, ledit matériau stocke une énergie donnée par une variation d'enthalpie.

Au sens de la présente invention, par « matériau chimiquement inerte », on entend un matériau qui n'est pas chimiquement actif. En particulier, le matériau de stockage thermique solide ne réagit pas avec le fluide caloporteur pendant les phases de charge et décharge ou de stockage. En outre, les éléments qui composent le matériau de stockage thermique ne réagissent pas entre eux.

Les particules de carbonate de calcium peuvent être sous forme de calcite ou d'aragonite, de préférence sous forme de calcite. La calcite peut par exemple être sous forme de marbre.

Le matériau de stockage thermique solide chimiquement inerte peut comporter des particules de carbonate de calcium et un ou plusieurs éléments solides.

Le ou les éléments solides peu(ven)t être choisi(s) en fonction de leurs caractéristiques liées à la capacité de stockage thermique et à leur comportement thermique, par exemple leur masse volumique, capacité thermique massique et conductivité thermique, et à leur compatibilité avec le fluide caloporteur.

A titre d'exemples, le ou les éléments solides est ou sont choisis parmi l'alumine et l'acier sous ses différentes nuances (inox, etc...).

De préférence, le matériau de stockage thermique solide chimiquement inerte ne comprend pas de particule de verre.

De préférence, le matériau de stockage thermique solide chimiquement inerte est constitué par des particules de carbonate de calcium. En d'autres termes, le matériau de stockage ne comporte que des particules de carbonate de calcium.

Conformément à ce mode de réalisation préférentiel, le matériau de stockage thermique solide est du carbonate de calcium qui se trouve sous la forme de particules et ne comporte pas d'éléments solides additionnels.

Les particules de carbonate de calcium selon l'invention peuvent avoir la forme de sphères, de paillettes et/ou présenter des formes totalement aléatoires.

Au sens de la présente invention, on entend par « taille de particule », la dimension maximale qu'il est possible de mesurer entre deux points diamétralement opposés de la particule. La taille des particules de carbonate de calcium est déterminée en mesurant leur surface spécifique et un critère sur le nombre de biot inférieur à 0,1 permettant de satisfaire l'hypothèse d'un corps thermiquement mince.

De préférence, les particules de carbonate de calcium présentent une distribution de taille ayant un diamètre d₅₀ allant de 0,5 mm (millimètres) à 200 mm, de préférence 1 mm à 100 mm, encore préférentiellement de 2 mm à 50 mm, et encore préférentiellement de 2 mm à 40 mm.

Au sens de la présente invention, le diamètre d₅₀ correspond à la valeur pour laquelle 50% en volume des particules de carbonate de calcium présentent, dans une distribution de particules, une taille inférieure ou égale à ce diamètre. Le diamètre est également défini comme étant la médiane de la distribution de particules.

Préférentiellement, les particules de carbonate de calcium présentent avantageusement au moins deux granulométries différentes. Ceci assure ainsi un remplissage satisfaisant du réservoir et réduisant les espaces libres pour le fluide caloporteur.

De cette façon, la porosité et la quantité de fluide caloporteur susceptible de circuler dans le réservoir sont minimisées.

Chaque granulométrie présente ainsi un diamètre d₅₀ de particules de carbonate de calcium.

De préférence, dans une distribution de particules, la répartition volumique est la suivante : environ 75% des particules de carbonate de calcium ayant un diamètre allant de 10 mm à 30 mm et 25% des particules de carbonate de calcium ayant un diamètre allant de 2 à 4 mm.

Une telle distribution de tailles de particules contribue au développement d'une plus grande surface d'échange thermique entre le fluide caloporteur et le matériau solide.

Le carbonate de calcium sous forme de particules présente de préférence une pureté pondérale de au moins 50 %, de préférence au moins 80 %, de préférence au moins 90 %, encore préférentiellement au moins 96 % encore préférentiellement au moins 97%.

Le matériau de stockage thermique solide peut être agencé dans le réservoir selon l'invention sous la forme d'un lit comportant au moins les particules de carbonate de calcium.

Dans ce cas, le matériau de stockage thermique solide est disposé sur un support et arrangé sous forme de lits. Le support est adapté pour supporter mécaniquement le lit de matériau de stockage solide et laisser circuler le fluide caloporteur.

En variante, le matériau de stockage thermique solide est réparti aléatoirement dans l'ensemble du réservoir sans agencement particulier mais de manière à réduire le plus possible les espaces libres pour le fluide caloporteur.

Le matériau de stockage solide est agencé de telle manière à maximiser les échanges thermiques avec le fluide caloporteur apte à circuler dans le réservoir.

De préférence, le matériau de stockage selon l'invention est statique dans le réservoir de stockage thermique. En d'autres termes, le matériau de stockage selon l'invention ne se déplace pas avec le fluide caloporteur tel que défini ci-après.

Selon l'invention, le réservoir de stockage thermique contient en outre au moins un fluide caloporteur. En particulier, le réservoir de stockage thermique contient un fluide caloporteur.

De préférence, le fluide caloporteur et le matériau solide de stockage thermique chimiquement inerte comportant au moins des particules de carbonate de calcium sont en contact direct à l'intérieur du réservoir de stockage thermique selon l'invention. En d'autres termes, le fluide caloporteur et le matériau solide de stockage thermique chimiquement inerte comportant au moins des particules de carbonate de calcium ne sont pas séparés par une paroi dans le réservoir de stockage thermique selon l'invention.

De préférence, le fluide caloporteur est liquide à température ambiante.

Selon l'invention, le fluide caloporteur est choisi parmi les huiles.

Selon l'invention, les huiles sont choisies parmi les huiles de synthèse, les huiles minérales telles que celles issues du pétrole, les huiles végétales, en particulier de l'huile de colza, ou un mélange de celles-ci.

De préférence, les huiles sont choisies parmi les huiles de synthèse, les huiles végétales et leur mélange, plus préférentiellement les huiles de synthèse.

Les huiles selon l'invention comprennent au moins un cycle aromatique.

Encore préférentiellement, les huiles selon l'invention comprennent au moins deux cycles séparés par au moins une liaison carbone, de manière encore préférentielle, les huiles selon l'invention comprennent au moins deux cycles séparés par au moins une liaison carbone, l'un au moins desdits au moins deux cycles étant un cycle aromatique.

De préférence, les huiles selon l'invention sont choisies dans le groupe constitué par :
- un mélange d'oxyde de diphényle et de diphényle,
- un mélange d'isomères de dibenzyltoluène, notamment vendue sous la dénomination commerciale Jarytherm^{®} DBT,
- une huile correspondant à un mélange de terphényls, notamment vendue sous la dénomination commerciale Therminol^{®} 66, et
- une huile comprenant du 1,2,3,4-Tétrahydro-(1-phényléthyl) naphtalène, notamment vendue sous la dénomination commerciale Dowtherm RP^{®},
encore préférentiellement, choisies dans le groupe constitué par :
- un mélange d'oxyde de diphényle et de diphényle,
- un mélange d'isomères de dibenzyltoluène, notamment vendue sous la dénomination commerciale Jarytherm^{®} DBT,
- une huile comprenant du 1,2,3,4-Tétrahydro-(1-phényléthyl) naphtalène, notamment vendue sous la dénomination commerciale Dowtherm RP^{®}.

De préférence, les huiles selon l'invention ne comprennent pas de terphényl. De manière particulièrement préférée, les huiles de synthèse selon l'invention comprennent un mélange d'isomères de dibenzyltoluène, notamment vendue sous la dénomination commerciale Jarytherm^{®} DBT, encore préférentiellement sont constitués un mélange d'isomères de dibenzyltoluène, notamment vendue sous la dénomination commerciale Jarytherm^{®} DBT.

Selon un mode de réalisation, le réservoir de stockage thermique est apte à contenir un fluide caloporteur choisi parmi les huiles telles que définies ci-dessus et comportant au moins un matériau de stockage thermique solide chimiquement inerte constitué par des particules de carbonate de calcium.

En particulier, le réservoir de stockage thermique selon l'invention comprend le fluide caloporteur tel que défini précédemment.

De préférence, le réservoir de stockage thermique comporte une cuve remplie d'un fluide caloporteur et d'un matériau solide de stockage thermique chimiquement inerte comportant au moins des particules de carbonate de calcium, une première extrémité longitudinale, située au niveau de sa partie supérieure, et une deuxième extrémité longitudinale située au niveau de sa partie inférieure ; le fluide caloporteur étant apte à circuler entre la première extrémité longitudinale et la deuxième extrémité longitudinale.

De préférence, la première extrémité longitudinale est munie de moyens de collecte et d'alimentation du fluide caloporteur à une première température.

De préférence, la deuxième extrémité longitudinale est munie de moyens de collecte et d'alimentation du fluide caloporteur à une deuxième température.

Conformément aux modes préférentiels décrits ci-avant, la première température est supérieure à la deuxième température.

De préférence, la première extrémité longitudinale est munie de moyens de collecte et d'alimentation du fluide caloporteur à une première température variant de 110°C à 650°C et la deuxième extrémité longitudinale est munie de moyens de collecte et d'alimentation du fluide caloporteur à une deuxième température variant de 100°C à 640°C ; la première température étant supérieure à la deuxième température.

Conformément à un autre mode de réalisation, le réservoir de stockage thermique selon l'invention peut présenter une structure telle que décrite dans la demande de brevet FR 2990502.

### Utilisation du matériau de stockage

Comme indiqué ci-avant, la présente invention est également relative à l'utilisation d'au moins un matériau de stockage thermique solide, chimiquement inerte, contenant au moins des particules de carbonate de calcium selon la revendication 12.

En particulier, le matériau de stockage thermique solide permet de limiter la vitesse de dégradation d'un fluide caloporteur dans un réservoir de stockage thermique tel que défini précédemment, c'est-à-dire remplissant et/ou circulant dans ledit réservoir.

Le matériau de stockage thermique solide est tel que défini ci-avant.

De préférence, le matériau de stockage thermique solide est constitué par des particules de carbonate de calcium, c'est-à-dire qu'il ne comprend pas d'éléments solides additionnels différents des particules de carbonate de calcium.

Le fluide caloporteur est tel que défini ci-avant. De préférence, le fluide est liquide à température ambiante et est choisi parmi les huiles.

Plus préférentiellement, le fluide caloporteur est une huile, de préférence une huile de synthèse, telle que définie ci-avant.

De préférence, le matériau de stockage thermique solide ainsi utilisé permet de limiter la vitesse de dégradation du fluide caloporteur dans une gamme de températures allant de 100 à 500°C.

### Installation de récupération de chaleur fatale d'origine industrielle

La présente invention porte également sur une installation de récupération de chaleur fatale d'origine industrielle comprenant un réservoir de stockage thermique tel que défini précédemment.

Par « chaleur fatale », on entend une production de chaleur dérivée d'un site de production. Par conséquent, il s'agit de la chaleur qui ne constitue pas l'objet premier dudit site.

### Centrale solaire

De même, la présente invention porte sur une centrale solaire selon la revendication 11.

De préférence, la centrale solaire est une centrale thermodynamique à concentration.

La centrale solaire comporte en outre un système de captation solaire et un cycle thermodynamique, notamment une turbine à vapeur.

De préférence, la première extrémité longitudinale, pourvue de moyens de collecte et d'alimentation du fluide caloporteur, et la deuxième extrémité longitudinale, pourvue de moyens de collecte et d'alimentation du fluide caloporteur, sont connectées au cycle thermodynamique, en particulier une turbine à vapeur.

D'autres caractéristiques et avantages de l'invention apparaîtront à l'examen détaillé d'un mode de réalisation pris à titre d'exemple non limitatif d'un réservoir de stockage thermique selon l'invention et illustré par les dessins annexés, sur lesquels :
- la figure 1 représente une vue en coupe longitudinale d'un réservoir de stockage thermique selon l'invention comportant une cuve remplie d'un fluide caloporteur et d'un matériau de stockage thermique solide,
- la figure 2 montre schématiquement le réservoir de stockage thermique selon l'invention au cours d'une phase de charge,
- la figure 3 illustre de manière schématique le réservoir de stockage thermique selon l'invention lors d'une phase de décharge (étape de déstockage).

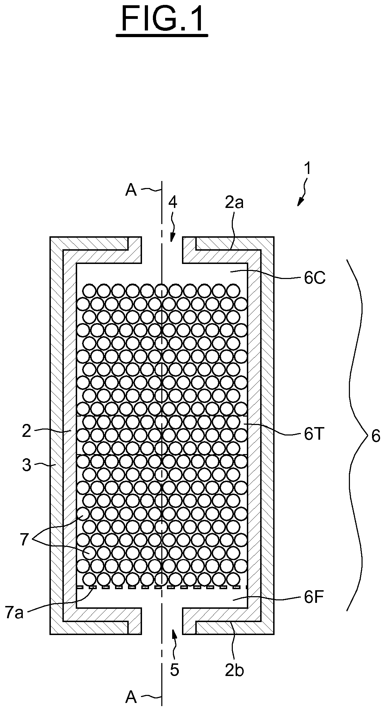

La figure 1 représente un réservoir de stockage thermique 1 selon l'invention réalisé conformément à un mode de réalisation.

Le réservoir 1 comporte une cuve 2 présentant une forme parallélépipédique ayant un axe longitudinal A-A orienté verticalement. En variante, la cuve 2 peut présenter une forme oblongue, en particulier une forme cylindrique, ayant un axe longitudinal A-A orienté verticalement.

Encore variante, la cuve 2 correspond à une virole ayant deux extrémités bombées.

Conformément à la figure 1, la cuve 2 est de préférence isolée thermiquement par une enveloppe 3 fabriquée à l'aide d'un matériau isolant.

De préférence, l'enveloppe 3 est en contact avec la cuve 2 de manière à recouvrir aussi bien les parois latérales que les parties supérieures et inférieures de la cuve 2. L'enveloppe 3 présente notamment la même forme que la cuve 2.

La cuve 2 présente une première extrémité longitudinale supérieure 2a munie d'un orifice 4, faisant office d'entrée ou de sortie d'un fluide en fonction des phases de charge et décharge du système, et une deuxième extrémité longitudinale inférieure 2b munie d'un orifice 5, faisant office d'entrée ou de sortie d'un fluide en fonction des phases de charge et décharge du système.

Les orifices 4 et 5 présentent donc une fonction d'alimentation et/ou de collecte du fluide caloporteur susceptible de remplir la cuve 2. Les orifices 4 et 5 peuvent être munis de moyens d'alimentation et de collecte du fluide.

L'enveloppe isolante 3 est également ouverte au niveau des orifices 4 et 5.

La cuve 2 est remplie avec un liquide caloporteur 6, de préférence une huile de synthèse telle que définie ci-avant, et un matériau de stockage thermique solide chimiquement inerte 7, constitué uniquement de particules de carbonate de calcium. Les particules de carbonate de calcium 7 reposent sur un support 7a assurant leur retenue tout en permettant le passage du liquide caloporteur 6 dans l'ensemble de la cuve 2.

Le support 7a peut être réalisé en une seule pièce ou être formé de plusieurs pièces pour faciliter son montage au sein de la cuve 2.

Sur la figure 1, les particules de carbonate de calcium 7 présentent un diamètre identique. Toutefois, selon un autre mode de réalisation préférentiel, les particules de carbonate 7 présentent des tailles différentes.

Le liquide caloporteur 6 occupe, selon l'axe longitudinal A-A, la partie supérieure de la cuve 2 à une première température (appelée température TC), la partie inférieure du réservoir à une deuxième température (appelée température TF), la partie médiane de la cuve 2, correspondant à une région intermédiaire appelée thermocline, intercalée entre la partie supérieure et la partie inférieure. La première température (TC) est supérieure à la deuxième température (TF).

Le liquide caloporteur 6 comporte donc une zone chaude 6C (à une température TC) située au niveau de la partie supérieure de la cuve 2, une zone froide 6F (à une température TF) située au niveau de la partie inférieure de la cuve 2 et une zone intermédiaire 6T, intercalée entre la zone chaude 6C et la zone froide 6F, appelée thermocline et constituant un gradient thermique.

En d'autres termes, le liquide caloporteur 6 est stratifié thermiquement dans la cuve 2, ces strates formant des couches ayant différentes températures qui sont superposées les unes sur les autres, de la zone la plus froide à la plus chaude conformément à l'axe longitudinal A-A.

La température TC peut varier de 110°C à 650°C et la température TF peut varier de 100°C à 640°C.

La température dans la zone intermédiaire 6T est inférieure à la température TC de la zone chaude 6C et supérieure à la température TF de la zone froide 6F.

De préférence, le fluide caloporteur 6 est une huile, en particulier une huile de synthèse, correspondant à un mélange d'isomères de dibenzyltoluène, notamment celle vendue sous la dénomination commerciale Jarytherm^{®} DBT.

La figure 1 représente la phase de stockage, c'est-à-dire l'étape durant laquelle le liquide caloporteur 6 est stocké dans le réservoir 1 et la thermocline se trouve en équilibre au centre du réservoir 1.

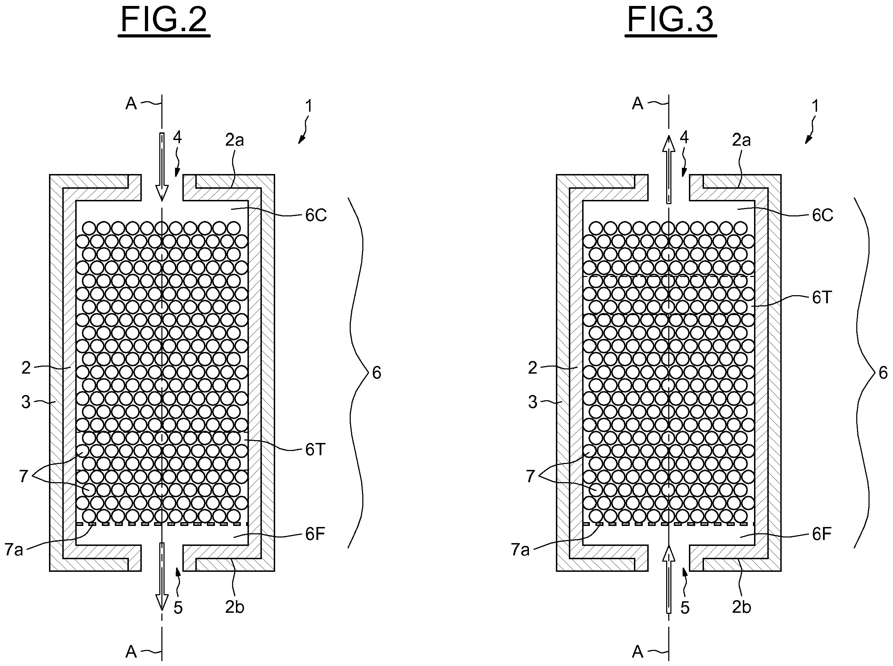

Comme indiqué ci-avant, la figure 2 décrit de manière schématique le réservoir de stockage selon l'invention, notamment en illustrant le sens de circulation du liquide caloporteur 6 au sein de la cuve 2, lors de la phase de charge.

Au cours de cette phase de charge, le liquide caloporteur 6 chaud, en provenance d'un système de captation solaire (non représenté sur la figure 2), est introduit dans la partie supérieure 2a par le biais de l'orifice 4 et s'écoule vers le bas (selon l'axe longitudinal A-A) à travers les particules de carbonate de calcium 7 induisant un déplacement de la thermocline 6T vers le bas. Au cours de sa circulation à travers les particules de carbonate de calcium 7, le liquide caloporteur 6 est refroidi pour atteindre la température TF et est évacué à travers l'orifice 5 de la partie inférieure 2b du réservoir 1 vers le système de captation solaire.

Sur la figure 2 a été représenté, par des flèches, le sens de circulation du liquide caloporteur 6 à travers le réservoir 1, à savoir du haut vers le bas selon l'axe longitudinal A-A. La zone intermédiaire 6T se déplace axialement vers le bas lors de la phase de charge.

Comme indiqué ci-avant, la figure 3 illustre de manière schématique le réservoir de stockage selon l'invention, notamment en illustrant le sens de circulation du liquide caloporteur 6 au sein de la cuve 2, lors de la phase de décharge (ou de déstockage).

Au cours de cette phase de décharge, le liquide caloporteur 6 froid, issue d'un système de conversion thermodynamique (non représenté sur la figure 3), est introduit à travers l'orifice 5 de la partie inférieure 2b de la cuve 2 et s'écoule vers le haut (selon l'axe longitudinal A-A) à travers les particules de carbonate de calcium 7 induisant un déplacement de la thermocline 6T vers le haut. Au cours de sa circulation à travers les particules de carbonate de calcium 7, le liquide caloporteur 6 est échauffé pour atteindre la température TC et est évacué à travers l'orifice 4 de la partie supérieure 2a du réservoir 1 vers le système de conversion thermodynamique, à savoir la turbine.

Sur la figure 3 a été représenté, par des flèches, le sens de circulation du liquide caloporteur à travers le réservoir 1, à savoir du bas vers le haut selon l'axe longitudinal A-A. La zone intermédiaire 6T se déplace axialement vers le haut lors de la phase de décharge.

Les figures 1 à 3 décrivent donc un mode de réalisation d'un système de stockage thermique à réservoir unique apte à contenir un fluide caloporteur et contenant au moins un matériau solide de stockage thermique comprenant au moins des particules de carbonate de calcium.

En variante, le réservoir 2 peut être divisé en plusieurs compartiments se superposant le long de l'axe longitudinal A-A, chaque compartiment comportant les particules de carbonate de calcium 7, disposées sous la forme d'un lit, recouvertes par le liquide caloporteur 6 capable de circuler à travers l'ensemble des compartiments.

Encore en variante, les particules de carbonate de calcium 7 peuvent avoir la forme de sphères, de paillettes et/ou présenter des formes totalement libres.

L'exemple suivant porte sur les essais de stabilité thermique du fluide caloporteur en fonction de la nature du matériau de stockage solide employé.

### Exemple de stabilité thermique

Dans cet exemple, la stabilité thermique d'une huile de synthèse vendue sous la dénomination commerciale Jarytherm ^{®} DBT par la société Arkema a été étudiée, dans un réservoir de stockage thermique, seule ou en présence de différents types de matériaux de stockage thermiques solides chimiquement inertes à une température de 340°C pendant une durée de 500 heures ou de 2000 heures.

La quantité d'huile de synthèse non dégradée a été mesurée à la fin de la durée d'étude.

Les résultats sont regroupés dans le tableau suivant :

| Conditions opératoires | Teneur en DBT dans l'huile |
|---|---|
| Huile neuve | 98 |
| Huile seule / **500** heures à 340°C | 92 |
| Huile + particules de carbonate de calcium / **500** heures à 340°C | 90,6 |
| Huile + roche / **500** heures à 340°C | 83,4 |
| Huile + sable / **500** heures à 340°C | 81,2 |
| Huile seule / **2000** heures à 340°C | 80,8 |
| Huile + particules de carbonate de calcium / **2000** heures à 340°C | 79,7 |

Les résultats montrent que la teneur en DBT dans l'huile est significativement supérieure avec des particules de carbonate de calcium par rapport à celle mesurée en présence de roches ou de sable après une durée de 500 heures à une température de 340°C.

Ces résultats montrent également que la teneur en DBT dans l'huile est similaire lorsque cette dernière est utilisée seule ou en présence de particules de carbonate de calcium. Ceci implique que l'huile utilisée peut être en partie avantageusement remplacée par des particules de carbonate de calcium sans impacter négativement sur sa qualité et le fonctionnement du système de stockage.

Grâce à l'économie réalisée avec l'utilisation de particules de carbonate de calcium, le réservoir de stockage thermique est financièrement plus avantageux qu'un réservoir comportant l'huile de synthèse seul. En effet, l'huile de synthèse est plus onéreuse que les particules de carbonate de calcium.

## Revendications

1. Réservoir de stockage thermique (1) comportant au moins un matériau de stockage thermique solide chimiquement inerte (7) contenant au moins des particules de carbonate de calcium, dans lequel les particules de carbonate de calcium présentent une distribution de taille ayant un diamètre d50 de 0,5 mm à 200 mm, de préférence 1 mm à 100 mm, encore préférentiellement de 2 mm à 50 mm, et encore préférentiellement de 2 mm à 40 mm, et comprenant en outre au moins un fluide caloporteur (6) choisi parmi les huiles de synthèse, les huiles minérales, les huiles végétales et leurs mélanges, lesdites huiles comprenant au moins un cycle aromatique.

2. Réservoir de stockage thermique (1) selon la revendication 1, ne contenant pas de particule de verre.

3. Réservoir de stockage thermique (1) selon la revendication 1 ou la revendication 2, **caractérisé en ce que** le fluide caloporteur (6) est liquide à température ambiante.

4. Réservoir de stockage thermique (1) selon l'une quelconque des revendication 1 à 3, **caractérisé en ce que** l'huile comprend au moins deux cycles séparés par au moins une liaison carbone, de préférence l'huile comprend au moins deux cycles séparés par au moins une liaison carbone, l'un au moins desdits au moins deux cycles étant un cycle aromatique.

5. Réservoir de stockage thermique (1) selon l'une quelconques des revendications 1 à 4, **caractérisé en ce que** l'huile est choisie dans le groupe constitué par :
- un mélange d'oxyde de diphényle et de diphényle,
- un mélange d'isomères de dibenzyltoluène, notamment vendue sous la dénomination commerciale Jarytherm^{®} DBT,
- une huile correspondant à un mélange de terphényls, notamment vendue sous la dénomination commerciale Therminol^{®} 66, et
- une huile comprenant du 1,2,3,4-Tétrahydro-(1-phényléthyl) naphtalène, notamment vendue sous la dénomination commerciale Dowtherm RP^{®},
de préférence, choisie dans le groupe constitué par :
- un mélange d'oxyde de diphényle et de diphényle,
- un mélange d'isomères de dibenzyltoluène, notamment vendue sous la dénomination commerciale Jarytherm^{®} DBT,
- une huile comprenant du 1,2,3,4-Tétrahydro-(1-phényléthyl) naphtalène, notamment vendue sous la dénomination commerciale Dowtherm RP^{®}.

6. Réservoir de stockage thermique (1) selon l'une quelconques des revendications 1 à 5, **caractérisé en ce que** l'huile ne comprend pas de terphényl.

7. Réservoir de stockage thermique (1) selon l'une quelconques des revendications 1 à 7, dans lequel le fluide caloporteur (6) et le matériau solide de stockage thermique chimiquement inerte comportant au moins des particules de carbonate de calcium(7) sont en contact direct.

8. Réservoir de stockage thermique (1) selon l'une quelconque des revendications précédentes, **caractérisé en ce qu'**il comporte une cuve (2) remplie d'un fluide caloporteur (6) et d'un matériau solide de stockage thermique chimiquement inerte (7) comportant au moins des particules de carbonate de calcium, une première extrémité longitudinale (2a), située au niveau de sa partie supérieure, et une deuxième extrémité longitudinale (2b) située au niveau de sa partie inférieure ; le fluide caloporteur (6) étant apte à circuler entre la première extrémité longitudinale (2a) et la deuxième extrémité longitudinale (2b).

9. Réservoir de stockage thermique (1) selon la revendication 8, dans lequel la première extrémité longitudinale (2a) est munie de moyens de collecte et d'alimentation du fluide caloporteur (6) à une première température (6C) variant de 110°C à 650°C et la deuxième extrémité longitudinale (2b) est munie de moyens de collecte et d'alimentation du fluide caloporteur (6) à une deuxième température (6F) variant de 100°C à 640°C ; la première température (6C) étant supérieure à la deuxième température (6F).

10. Installation de récupération de chaleur fatale d'origine industrielle comprenant un réservoir de stockage thermique (1) selon l'une quelconque des revendications 1 à 9.

11. Centrale solaire comportant au moins un réservoir de stockage thermique (1) selon l'une quelconque des revendications 1 à 9.

12. Utilisation d'au moins un matériau de stockage thermique solide chimiquement inerte (7) comportant au moins des particules de carbonate de calcium pour limiter la vitesse de dégradation d'un fluide caloporteur (6) circulant dans un réservoir de stockage thermique (1) tel que défini selon l'une quelconque des revendications 1 à 9.

## Patentansprüche

1. Wärmespeichertank (1), der mindestens ein chemisch inertes festes Wärmespeichermaterial (7), das zumindest Calciumcarbonatpartikel enthält, wobei die Calciumcarbonatpartikel eine Größenverteilung mit einem Durchmesser d₅₀ von 0,5 mm bis 200 mm, vorzugsweise von 1 mm bis 100 mm, noch bevorzugter von 2 mm bis 50 mm und noch bevorzugter von 2 mm bis 40 mm aufweisen, und weiterhin mindestens ein Wärmeübertragungsfluid (6) umfasst, das aus synthetischen Ölen, Mineralölen, Pflanzenölen und deren Mischungen ausgewählt ist, wobei die Öle mindestens einen aromatischen Ring umfassen.

2. Wärmespeichertank (1) nach Anspruch 1, der kein Glaspartikel enthält.

3. Wärmespeichertank (1) nach Anspruch 1 oder Anspruch 2, **dadurch gekennzeichnet, dass** das Wärmeübertragungsfluid (6) bei Umgebungstemperatur flüssig ist.

4. Wärmespeichertank (1) nach einem der Ansprüche 1 bis 3, **dadurch gekennzeichnet, dass** das Öl mindestens zwei durch mindestens eine Kohlenstoffbindung getrennte Ringe umfasst, wobei das Öl vorzugsweise mindestens zwei durch mindestens eine Kohlenstoffbindung getrennte Ringe umfasst, wobei mindestens einer der mindestens zwei Ringe ein aromatischer Ring ist.

5. Wärmespeichertank (1) nach einem der Ansprüche 1 bis 4, **dadurch gekennzeichnet, dass** das Öl ausgewählt ist aus der Gruppe bestehend aus:
- einer Mischung von Diphenyloxid und Diphenyl,
- einer Mischung von Dibenzyltoluol-Isomeren, die insbesondere unter der Handelsbezeichnung Jarytherm^{®} DBT vertrieben werden,
- einem Öl, das einer Terphenylmischung entspricht, die insbesondere unter der Handelsbezeichnung Therminol^{®} 66 vertrieben werden, und
- einem Öl, das 1,2,3,4-Tetrahydro-(1-phenylethyl)naphthalin umfasst, das insbesondere unter der Handelsbezeichnung Dowtherm RP^{®} vertrieben wird,
vorzugsweise ausgewählt ist aus der Gruppe bestehend aus:
- einer Mischung von Diphenyloxid und Diphenyl,
- einer Mischung von Dibenzyltoluol-Isomeren, die insbesondere unter der Handelsbezeichnung Jarytherm^{®} DBT vertrieben werden,
- einem Öl, das 1,2,3,4-Tetrahydro-(1-phenylethyl)naphthalin umfasst, das insbesondere unter der Handelsbezeichnung Dowtherm RP^{®} vertrieben wird.

6. Wärmespeichertank (1) nach einem der Ansprüche 1 bis 5, **dadurch gekennzeichnet, dass** das Öl kein Terphenyl umfasst.

7. Wärmespeichertank (1) nach einem der Ansprüche 1 bis 7, wobei sich das Wärmeübertragungsfluid (6) und das chemisch inerte feste Wärmespeichermaterial, das zumindest Calciumcarbonatpartikel (7) umfasst, in direktem Kontakt befinden.

8. Wärmespeichertank (1) nach einem der vorhergehenden Ansprüche, **dadurch gekennzeichnet, dass** er einen Behälter (2), der mit einem Wärmeübertragungsfluid (6) und einem zumindest Calciumcarbonatpartikel umfassenden chemisch inerten festen Wärmespeichermaterial (7) gefüllt ist, ein erstes Längsende (2a), das sich auf Höhe seines oberen Abschnitts befindet, und ein zweites Längsende (2b), das sich auf Höhe seines unteren Abschnitts befindet, umfasst, wobei das Wärmeübertragungsfluid (6) dazu geeignet ist, zwischen dem ersten Längsende (2a) und dem zweiten Längsende (2b) zu zirkulieren.

9. Wärmespeichertank (1) nach Anspruch 8, wobei das erste Längsende (2a) mit Mitteln zum Sammeln von und zur Versorgung mit Wärmeübertragungsfluid (6) bei einer ersten Temperatur (6C) von 110 °C bis 650 °C versehen ist und das zweite Längsende (2b) mit Mitteln zum Sammeln von und zur Versorgung mit Wärmeübertragungsfluid (6) bei einer zweiten Temperatur (6F) von 100 °C bis 640 °C versehen ist; wobei die erste Temperatur (6C) höher als die zweite Temperatur (6F) ist.

10. Anlage zur Rückgewinnung von Abwärme industrieller Herkunft, die einen Wärmespeichertank (1) nach einem der Ansprüche 1 bis 9 umfasst.

11. Solarkraftwerk, das mindestens einen Wärmespeichertank (1) nach einem der Ansprüche 1 bis 9 umfasst.

12. Verwendung mindestens eines chemisch inerten festen Wärmespeichermaterials (7), das zumindest Calciumcarbonatpartikel enthält, zur Begrenzung der Zersetzungsgeschwindigkeit eines Wärmeübertragungsfluids (6), das in einem Wärmespeichertank (1) nach einem der Ansprüche 1 bis 9 zirkuliert.

## Claims

1. Heat storage tank (1) including at least one chemically inert solid heat storage material (7) containing at least calcium carbonate particles, in which the calcium carbonate particles have a size distribution with a diameter d₅₀ of from 0.5 mm to 200 mm, preferably 1 mm to 100 mm, more preferentially from 2 mm to 50 mm and more preferentially from 2 mm to 40 mm, and also comprising at least one heat-transfer fluid (6) chosen from synthetic oils, mineral oils, plant oils and mixtures thereof, said oils comprising at least one aromatic ring.

2. Heat storage tank (1) according to Claim 1, not containing any glass particles.

3. Heat storage tank (1) according to Claim 1 or 2, **characterized in that** the heat-transfer fluid (6) is liquid at ambient temperature.

4. Heat storage tank (1) according to any one of Claims 1 to 3, **characterized in that** the oil comprises at least two rings separated by at least one carbon bond; preferably, the oil comprises at least two rings separated by at least one carbon bond, at least one of said at least two rings being an aromatic ring.

5. Heat storage tank (1) according to any one of Claims 1 to 4, **characterized in that** the oil is chosen from the group consisting of:
- a mixture of diphenyl ether and biphenyl,
- a mixture of dibenzyltoluene isomers, sold notably under the trade name Jarytherm^{®} DBT,
- an oil corresponding to a mixture of terphenyls, sold notably under the trade name Therminol^{®} 66, and
- an oil comprising 1,2,3,4-tetrahydro(1-phenylethyl)-naphthalene, sold notably under the trade name Dowtherm RP^{®},
preferably chosen from the group consisting of:
- a mixture of diphenyl ether and biphenyl,
- a mixture of dibenzyltoluene isomers, sold notably under the trade name Jarytherm^{®} DBT,
- an oil comprising 1,2,3,4-tetrahydro(1-phenylethyl)-naphthalene, sold notably under the trade name Dowtherm RP^{®}.

6. Heat storage tank (1) according to any one of Claims 1 to 5, **characterized in that** the oil does not comprise any terphenyl.

7. Heat storage tank (1) according to any one of Claims 1 to 7, in which the heat-transfer fluid (6) and the chemically inert solid heat storage material including at least calcium carbonate particles (7) are in direct contact.

8. Heat storage tank (1) according to any one of the preceding claims, **characterized in that** it includes a vessel (2) filled with a heat-transfer fluid (6) and a chemically inert solid heat storage material (7) including at least calcium carbonate particles, a first longitudinal end (2a), located at its upper part, and a second longitudinal end (2b) located at its lower part; the heat-transfer fluid (6) being capable of circulating between the first longitudinal end (2a) and the second longitudinal end (2b).

9. Heat storage tank (1) according to Claim 8, in which the first longitudinal end (2a) is equipped with means for collecting and feeding the heat-transfer fluid (6) at a first temperature (6C) ranging from 110°C to 650°C and the second longitudinal end (2b) is equipped with means for collecting and feeding the heat-transfer fluid (6) at a second temperature (6F) ranging from 100°C to 640°C; the first temperature (6C) being higher than the second temperature (6F).

10. Facility for recovering free heat of industrial origin, comprising a heat storage tank (1) according to any one of Claims 1 to 9.

11. Solar power plant including at least one heat storage tank (1) according to any one of Claims 1 to 9.

12. Use of at least one chemically inert solid heat storage material (7) including at least calcium carbonate particles for limiting the rate of degradation of a heat-transfer fluid (6) circulating in a heat storage tank (1) as defined in any one of Claims 1 to 9.
